# EUROPÄISCHE PATENTSCHRIFT

(11) **EP 2 531 686 B1**
(45) Veröffentlichungstag und Bekanntmachung des Hinweises auf die Patenterteilung: **23.07.2014**
(21) Anmeldenummer: 11706185.3
(22) Anmeldetag: 25.01.2011
(51) Int. Cl.: E05F 15/16, B60J 5/04

(54) **TÜRMODUL MIT EINEM AKUSTISCHEN ENTKOPPLUNGSMITTEL**
DOOR MODULE WITH ACOUSTIC DECOUPLING MEANS
MODULE DE PORTE AVEC MOYEN DE DECOUPLAGE ACOUSTIQUE

(30) Priorität: 04.02.2010 DE 202010002222 U
(43) Veröffentlichungstag der Anmeldung: 12.12.2012
(73) Patentinhaber: Brose Fahrzeugteile GmbH & Co. KG, Hallstadt, 96103 Hallstadt (DE)
(72) Erfinder: KRIESE, Olaf, 96450 Coburg (DE); MÜLLER, Joachim, 97440 Werneck (DE); SCHULTZ, Markus, 90425 Nürnberg (DE); STAMMBERGER, Werner, 96271 Grub am Forst (DE)
(74) Vertreter: Schröder, Christoph
(86) Internationale Anmeldenummer: PCT/EP2011/050961
(87) Internationale Veröffentlichungsnummer: WO 2011/095415

(56) Entgegenhaltungen:
- EP-A1- 0 847 127
- DE-A1- 19 528 467
- DE-A1-102006 007 679
- US-A- 5 111 620

## Beschreibung

Die Erfindung betrifft ein Türmodul einer Fahrzeugtür nach dem Oberbegriff des Anspruchs 1.

Ein derartiges Türmodul weist eine Trägerplatte und eine an der Trägerplatte angeordnete Antriebseinheit zum Antreiben einer motorisch betriebenen Verstellvorrichtung des Türmoduls auf. Die Trägerplatte kann als integrierter Aggregateträger zum Tragen von unterschiedlichen Funktionskomponenten einer Fahrzeugtür ausgebildet sein, beispielsweise einer Fensterhebereinheit, eines Türschlosses, eines Lautsprechers oder anderer funktionaler Komponenten der Fahrzeugtür. Die Antriebseinheit dient beispielsweise zum Antreiben des Fensterhebers und weist hierzu beispielsweise einen Elektromotor zum motorischen Antreiben einer entlang von Führungsschienen geführten Fensterscheibe auf.

Eine Trägerplatte eines solchen Türmoduls erstreckt sich flächig und wird zur Montage des Türmoduls an einer Fahrzeugtür beispielsweise mit einem Türinnenblech der Fahrzeugtür verbunden. Die Trägerplatte ist dabei heutzutage in der Regel aus Kunststoff ausgebildet und trägt die über eine oder mehrere Befestigungsstellen angebundene Antriebseinheit.

Im Betrieb der Antriebseinheit werden zwangsläufig Bauteile, beispielsweise bewegliche Teile des Elektromotors oder angetriebene Getriebeteile, in Bewegung versetzt. Diese Bewegungen der Antriebseinheit oder ihrer Bauteile werden als Schwingungen über die koppelnden Befestigungsstellen auch in die Trägerplatte eingeleitet und regen die Trägerplatte zu Schwingungen an. In Folge dieser Anregung werden Schallwellen (auch als Köperschall bezeichnet) generiert, die im Fahrzeuginneren wahrgenommen werden können und dann, wenn sich der Frequenzbereich der Anregungsschwingungen mit Eigenresonanzfrequenzen der Fahrzeugtüranordnung überlappt, noch verstärkt werden können und gegebenenfalls zu einem störenden Vibrieren und Klappern führen.

Es ist wünschenswert, bei derartigen Türmodulen eine Schallerzeugung und eine Schallausbreitung zu unterbinden oder zumindest so zu reduzieren, dass sie von einem Fahrzeuginsassen im Fahrzeug nicht mehr als störend wahrgenommen werden.

Bei einem aus der DE 10 2008 048 236 A1 bekannten Türmodul ist eine Antriebseinheit über drei Befestigungsstellen mit einer Trägerplatte gekoppelt, wobei als akustisches Entkopplungsmittel zur Dämpfung der Anregung an der Trägerplatte um die Antriebseinheit herum oder um jede der Befestigungsstellen der Antriebseinheit herum Bereiche mit erhöhter Elastizität vorgesehen sind. Hierzu sind um die Antriebseinheit oder um die Befestigungsstellen herum umfängliche, wellenartig geformte Ringe vorgesehen, die in ihrer Steifigkeit weicher sind als die übrigen Abschnitte der Trägerplatte und damit Vibrationen der Antriebseinheit nicht oder zumindest nur in stark gedämpfter Weise auf die Trägerplatte übertragen.

Die US 5,111,620 offenbart eine Trägerplatte, bei der eine Antriebseinheit über einen Basisabschnitt und Energie absorbierende Streifenabschnitte in einer Öffnung der Trägerplatte gehalten ist.

Aus der EP 0847127 A1 ist ein Gehäuseteil eines Elektroantriebs bekannt, das über Befestigungsstellen an einem zugeordneten weiteren Bauteil befestigt werden kann. Das Gehäuseteil ist integraler Bestandteil eines Antriebs und weist Befestigungsstellen auf, an denen Schlitze zur Bereitstellung federnder Stege vorgesehen sind.

Aus der DE 195 28 467 A1 ist eine Fahrzeugtür bekannt, bei der ein Befestigungsbereich einer Führungsschiene durch eine von einer Trägerplatte freigeschnittene Federzunge gebildet ist. Die Federzungen dienen zur Anbindung von Führungsschienen an eine Trägerplatte. Die Federzungen sind dabei elastisch, um auf diese Weise einen Toleranzausgleich bei der Festlegung der Führungsschienen an einer Türstruktur zu ermöglichen.

Aufgabe der vorliegenden Erfindung ist es, ein Türmodul zur Verfügung zu stellen, das eine verbesserte akustische Endkopplung der Antriebseinheit von der Trägerplatte zur Reduzierung der akustischen Anregung der Trägerplatte und des entstehenden Körperschalls bei einfacher und kostengünstiger Bauweise des Türmoduls ermöglicht.

Diese Aufgabe wird durch einen Gegenstand mit den Merkmalen des Anspruchs 1 gelöst.

Dabei ist das Entkopplungsmittel gebildet durch
- mindestens einen Schlitz, der einen die Antriebseinheit tragenden Abschnitt von einem anderen Abschnitt der Trägerplatte abschnittsweise trennt und um die Antriebseinheit oder um eine Befestigungsstelle der Antriebseinheit an der Trägerplatte in eine Umfangsrichtung umläuft, und
- mindestens einen Steg, der den die Antriebseinheit tragenden Abschnitt mit dem anderen Abschnitt der Trägerplatte verbindet.

Grundgedanke der Erfindung ist, durch Vorsehen eines oder mehrerer Schlitze an der Trägerplatte die Trägerplatte akustisch zu unterbrechen, um einen Abschnitt der Trägerplatte, an dem die Antriebseinheit angeordnet ist, von den übrigen Abschnitten der Trägerplatte akustisch zu trennen. Der Schlitz kann dabei entweder die Antriebseinheit insgesamt oder jede Befestigungsstelle der Antriebseinheit einzeln umgeben, so dass über den Schlitz die Antriebseinheit akustisch von der eigentlichen Trägerplatte getrennt ist.

Der mindestens eine Schlitz, der die Trägerplatte abschnittsweise öffnet und damit akustisch unterbricht, läuft nicht vollständig um die Antriebseinheit oder um eine Befestigungsstelle der Antriebseinheit um, sondern ist durch einen Steg unterbrochen, der den die Antriebseinheit tragenden Abschnitt mit der eigentlichen Trägerplatte verbindet. Über den tragenden Abschnitt und den verbindenden Steg wird die Antriebseinheit gehalten und mit den übrigen Abschnitten der Trägerplatte verbunden, und es werden Kräfte in geeigneter Weise in die Trägerplatte und die Fahrzeugtür eingeleitet.

Grundsätzlich können ein oder mehrere Schlitze und entsprechend viele Stege vorgesehen sein. Die Schlitze dienen hierbei zum akustischen Unterbrechen der Trägerplatte, während die Stege zur Anbindung und mechanischen Kopplung der Antriebseinheit mit der Trägerplatte dienen.

Um eine effiziente akustische Entkopplung der Antriebseinheit von der eigentlichen Trägerplatte zu erreichen, ist die in Umfangsrichtung gemessene Breite eines Steges vorteilhafterweise kleiner als die in Umfangsrichtung gemessene Länge eines Schlitzes. Vorteilhafterweise sollte die Breite der Stege insgesamt klein sein gegenüber der Länge der Schlitze, so dass die Antriebseinheit durch umlaufende Schlitze weitestgehend von der eigentlichen Trägerplatte entkoppelt ist.

Die an der Trägerplatte angeordneten Schlitze und Stege bilden zusammen einen die Antriebseinheit oder eine Befestigungsstelle umfänglich umgebenden Entkopplungsring zum akustischen Entkoppeln der Antriebseinheit aus. Dieser Entkopplungsring läuft um die Antriebseinheit oder eine Befestigungsstelle der Antriebseinheit um und schließt diese damit umfänglich ein. Auf diese Weise wird die Antriebseinheit akustisch von der eigentlichen Trägerplatte entkoppelt, die Ausbreitung des Körperschalls von einem die Antriebseinheit haltenden Abschnitt hin zu den übrigen Abschnitten der Trägerplatte wird eingeschränkt, und die akustische Anregung der Trägerplatte und daran befestigter weitere Funktionskomponenten wird nach Möglichkeit unterbunden. Der die Antriebseinheit tragende Abschnitt der Trägerplatte ist dabei in seiner Fläche vorteilhafterweise klein gegenüber der Fläche der übrigen Abschnitt der Trägerplatte, so dass überwiegende Teile der Trägerplatte im Betrieb der Antriebseinheit nicht oder nur gedämpft zu Schwingungen angeregt werden.

Der Entkopplungsring kann eine kreisförmige Form aufweisen, kann aber auch beispielsweise oval oder rechteckig ausgebildet sein und sich um die Antriebseinheit oder eine Befestigungsstelle der Antriebseinheit erstrecken. Der Begriff "Ring" wird hier als Synonym für eine umlaufende Anordnung verwendet, die eine beliebige, auch geometrisch unregelmäßige Form aufweisen und insbesondere von einer Kreisform abweichen kann.

Durch gezieltes Anbringen der Schlitze und durch Optimierung der Schlitze hinsichtlich ihrer Ausrichtung und Länge kann zudem das Resonanzverhalten der Trägerplatte insgesamt und solcher Abschnitte, die besonders einer akustischen Anregung ausgesetzt sind, beeinflusst werden.

Denkbar und vorteilhaft kann auch sein, zwei oder mehr Entkopplungsringe vorzusehen, die jeweils durch mindestens einen Schlitz und mindestens einen Steg an der Trägerplatte gebildet sind und um die Antriebseinheit oder eine Befestigungsstelle der Antriebseinheit umlaufen. Die mehreren Entkopplungsringe sind dabei radial (quer zur Umfangsrichtung) derart zueinander versetzt, dass auf einen inneren Entkopplungsring ein weiter außen gelegener Entkopplungsring und gegebenenfalls weitere Entkopplungsringe auf diesen Entkopplungsring folgen. Die Entkopplungsringe sind damit ineinander, gegebenenfalls konzentrisch zueinander angeordnet.

Sind mehrere Entkopplungsringe, beispielsweise zwei Entkopplungsringe vorgesehen, kann ein innerer Entkopplungsring derart zu einem äußeren Entkopplungsring angeordnet sein, dass die Stege des inneren Entkopplungsringes in Umfangsrichtung zu den Stegen des äußeren Entkopplungsringes versetzt sind. Gedanke hierbei ist, durch Anordnung und Ausrichtung unterschiedlicher Entkopplungsringe zueinander eine Körperschallausbreitung durch Schwingungsübertragung von einem inneren, die Antriebseinheit tragenden Abschnitt der Trägerplatte hin zu äußeren Abschnitten der Trägerplatte über die Stege zu reduzieren, indem von innen nach außen gesehen auf einen Steg ein Schlitz folgt und die Stege von dem inneren Entkopplungsring und dem äußeren Entkopplungsring in Umfangsrichtung gesehen nicht an gleicher Stelle angeordnet sind. Die über einen Steg eines inneren Entkopplungsring übertragenen Schallwellen treffen damit in Ausbreitungsrichtung auf einen Schlitz eines äußeren Entkopplungsrings und werden von diesem reflektiert, so dass eine Schwingungsübertragung von dem die Antriebseinheit tragenden inneren Abschnitt hin zu äußeren Abschnitten der Trägerplatte nicht oder nur in sehr eingeschränktem Maße möglich ist.

Denkbar ist auch, nur einen Entkopplungsring vorzusehen, der jedoch Schlitze aufweist, die sich in Umfangsrichtung zumindest abschnittsweise überlappen. Die Schlitze sind damit in Umfangsrichtung mit ihren Enden nicht zueinander ausgerichtet, sondern überlappen sich in ihren Endabschnitten, wobei einen äußeren Endabschnitt eines Schlitzes ein nach innen versetzter Endabschnitt des nächsten Schlitzes folgt. Beispielsweise sind die Schlitze nicht auf einem den Entkopplungsring beschreibenden Kreis angeordnet, sondern jeder Schlitz erstreckt sich schräg zu dem (gedachten) Kreis und schneidet diesen Kreis. Es ergeben sich Stege zwischen den Schlitzen, die nicht in der bevorzugten Ausbreitungsrichtung der angeregten Wellen, sondern schräg zu dieser gerichtet sind.

Die Schlitze dienen zur akustischen Unterbrechung der Trägerplatte und öffnen die Trägerplatte zumindest abschnittsweise. Da die Trägerplatte des Türmoduls häufig auch eine Feuchtigkeitsbarriere für eine feuchtigkeitsdichte Trennung eines Nassraums von einem Trockenraum der Fahrzeugtür herstellen soll, ist vorgesehen, dass an der Trägerplatte zur Feuchtigkeitsabdichtung eine den mindestens einen Schlitz abdeckende oder ausfüllende Folie, ein Filmscharnier oder eine Schaumfüllung angeordnet ist. Die Folie, der Filmscharnier oder die Schaumfüllung stellen damit die Dichtheit der Trägerplatte für die erforderliche Nass-Trockenraum-Trennung her, ohne die durch die Schlitze bereitgestellte akustische Entkopplung wesentlich zu beeinflussen. Akustisch ist die Trägerplatte damit durch die Schlitze geöffnet, nicht aber für einen Feuchtigkeitsdurchtritt.

Der der Erfindung zugrunde liegende Gedanke soll nachfolgend anhand der in den Figuren dargestellten Ausführungsbeispiele näher erläutert werden. Es zeigen:
- Fig. 1: eine Seitenansicht eines Türmoduls einer Fahrzeugtür;
- Fig. 2: eine Ansicht einer Antriebseinheit an einer Trägerplatte, umgeben von einem Entkopplungsring;
- Fig. 3: eine Seitenansicht der Antriebseinheit an der Trägerplatte;
- Fig. 4A, 4B: Ansichten der Trägerplatte mit daran angeordneten Entkopplungsringen von außen (Fig. 4A) und von innen (Fig. 4B);
- Fig. 5: eine Ansicht der Trägerplatte mit daran angeordneten Entkopplungsringen unterschiedlicher Gestalt;
- Fig. 6: Ansichten der Trägerplatte mit Entkopplungsringen, die die Befestigungsstellen zur Anbindung der Antriebseinheit einzeln umgeben;
- Fig. 7: eine schematische Ansicht der Ausrichtung zweier Entkopplungsringe zueinander;
- Fi8.8A: eine schematische Ansicht eines durch einen Filmscharnier geschlossenen Schlitzes an einer Trägerplatte;
- Fig. 8B: eine schematische Ansicht eines durch eine aufgeklebte Folie geschlossenen Schlitzes an einer Trägerplatte und
- Fig. 8C-8E: schematische Ansichten eines durch unterschiedliche Schaumfüllungen geschlossenen Schlitzes an einer Trägerplatte.

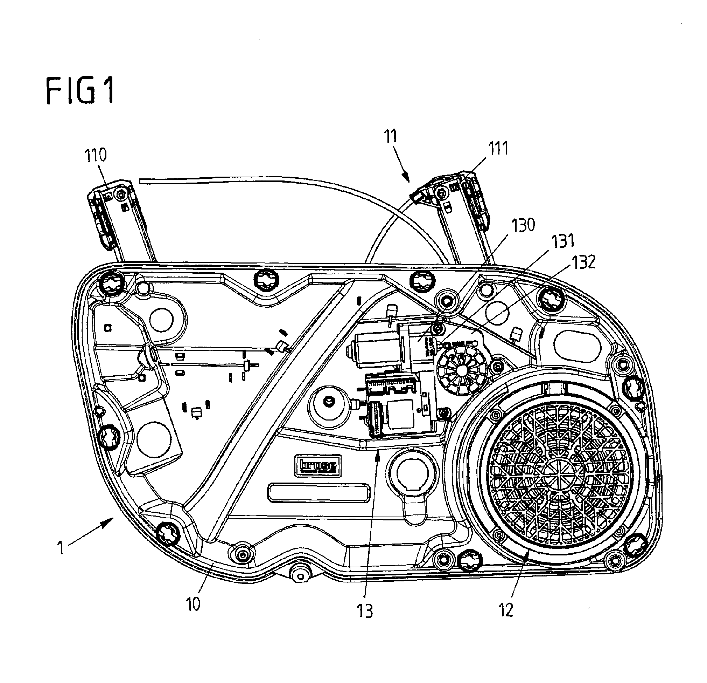

Fig. 1 zeigt in einer Seitenansicht ein Türmodul 1 mit einer aus Kunststoff hergestellten Trägerplatte 10, an dem unterschiedliche Funktionskomponenten einer Fahrzeugtür angeordnet sind. So ist an der Trägerplatte 10 ein Fensterheber 11 mit zwei sich im Wesentlichen vertikal erstreckenden Führungsschienen 110, 111, ein Lautsprecher 12 und eine Antriebseinheit 13 des Fensterhebers 11 angeordnet. Zusätzlich können an der Trägerplatte 10 beispielsweise ein Türschloss, ein Seitenairbag oder auch andere funktionale Komponenten der Fahrzeugtür angeordnet sein.

Das Türmodul 1 verwirklicht ein kompaktes, integriertes Modul, das zusammen mit den daran angeordneten Funktionskomponenten als Einheit an der Fahrzeugtür montiert werden kann.

Im Betrieb des Fensterhebers 11 wird eine Fensterscheibe, angetrieben durch die Antriebseinheit 13, entlang der Führungsschienen 110, 111 bewegt. Die Antriebseinheit 13 weist hierzu einen Antriebsmotor 130 in Form eines Elektromotors, beispielsweise eines Stabankermotors, auf, der über eine Welle 131 ein in einem Getriebegehäuse 132 angeordnetes Getriebe antreibt, das beispielsweise - bei einem Seilfensterheber - über ein Zugmittel eine Verstellkraft auf die zu verstellende Fensterscheibe überträgt.

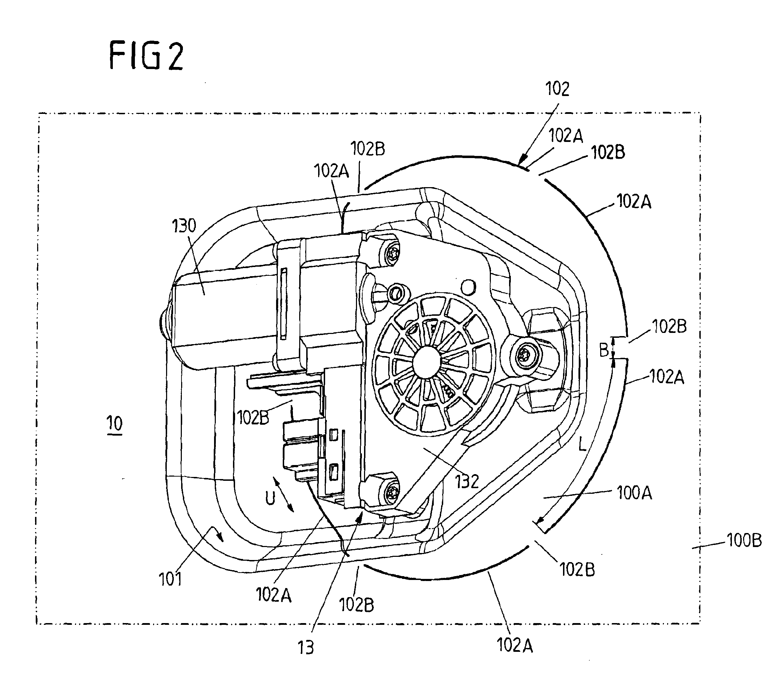

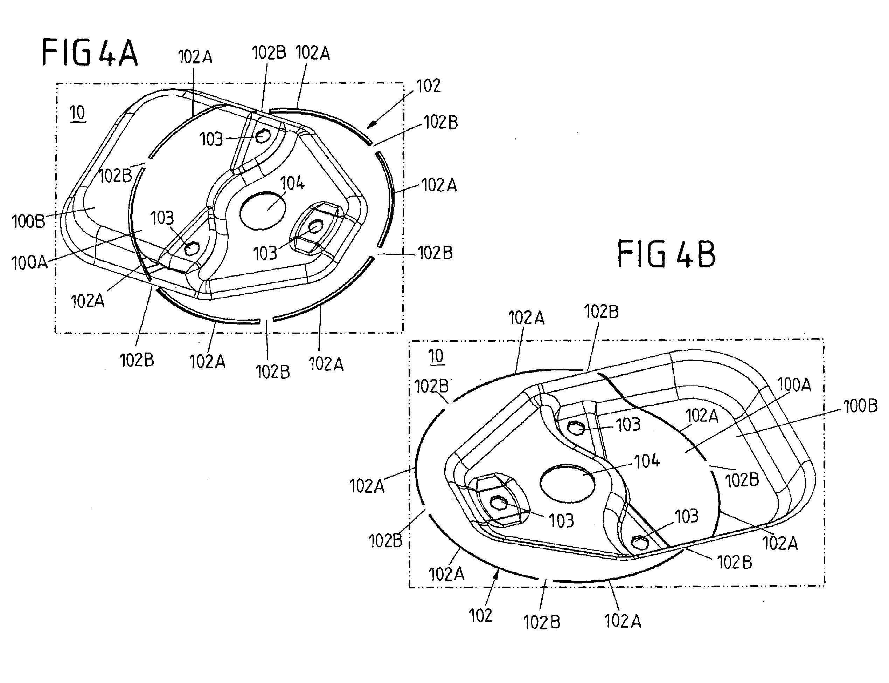

Wie aus Fig. 2 und Fig. 4A, 4B ersichtlich, ist die Antriebseinheit 13 innerhalb einer Ausformung 101 der Trägerplatte 10 angeordnet und über Befestigungsstellen 103 mit der Trägerplatte 10 gekoppelt. Getriebeteile durchgreifen die Trägerplatte 10 an einer Durchgriffsöffnung 104 beispielsweise zum Antreiben einer im Nassraum der Fahrzeugtür angeordneten Seiltrommel über die im Trockenraum der Fahrzeugtür angeordnete Antriebseinheit 13.

Im Betrieb der Antriebseinheit 13 werden in Folge der Bewegung von Bauteilen des Elektromotors 130 und des angetriebenen Getriebes Schwingungen erzeugt, die über die Befestigungsstellen 103 zur Kopplung der Antriebseinheit 13 mit der Trägerplatte 10 auch auf die Trägerplatte 10 übertragen werden. Dadurch kann es zu einer Schwingungsanregung auch der Trägerplatte 10 und einer Schallerzeugung kommen, die bei Anregung im Bereich der Eigenresonanzfrequenzen der Türanordnung noch verstärkt wird und im Fahrzeuginnenraum als störend wahrgenommen werden kann.

Wie in Fig. 2 bis 8 veranschaulicht, ist aus diesem Grunde zur akustischen Entkopplung der Antriebseinheit 13 und zum Unterbinden oder zumindest zum Dämpfen der akustischen Anregung der Trägerplatte 10 vorgesehen, die Antriebseinheit 13 insgesamt oder zumindest deren Befestigungsstellen 103 von einem oder mehreren Entkopplungsringen 102, 105, 106 zu umgeben, die durch Schlitze 102A, 105A, 106A, die die Trägerplatte 10 akustisch unterbrechen, und zwischen den einzelnen Schlitzen 102A, 105A, 106A angeordnete Stege 102B, 105B, 106B verwirklicht sind. Die Schlitze 102A, 105A, 106A unterbrechen und öffnen dabei die Trägerplatte 10 abschnittsweise, während die Stege 102B, 105B, 106B die mechanische Anbindung eines die Antriebseinheit 13 tragenden Abschnitts 100A an einen äußeren Abschnitt 100B der Trägerplatte 10 herstellen.

Wie in Fig. 2 bis 4 dargestellt, kann ein Entkopplungsring 102 zur akustischen Entkopplung vorgesehen sein, der die Antriebseinheit 13 als Ganzes umfänglich (entlang einer Umfangsrichtung U) umgibt und damit die Antriebseinheit 13 durch einen durch die Schlitze 102A und die Stege 102B gebildeten Ring einschließt. Die Länge L der Schlitze 102A ist dabei in Umfangsrichtung U gemessen, wesentlich größer als die Breite B der Stege 102B (siehe Fig. 2).

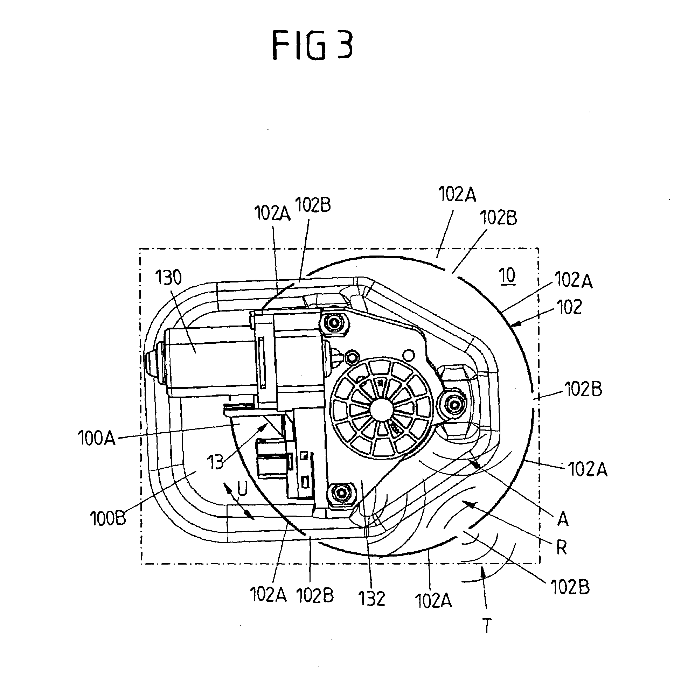

Durch das Vorsehen der Schlitze 102A wird die Trägerplatte 10 abschnittsweise akustisch geöffnet, so dass über die Schlitze 102A hinweg keine Ausbreitung von Schallwellen und keine Übertragung von Schallenergie stattfinden kann. Wie in Fig. 3 veranschaulicht, werden sich ausbreitenden Schallwellen (Anregung A) an den Schlitzen 102A reflektiert (Reflexion R), so dass die angeregte Schwingungsenergie im Bereich des die Antriebseinheit 13 tragenden inneren Abschnitts 100A verbleibt und nur ein geringer Anteil über die Stege 102B nach außen übertragen wird (Transmission T). Die Anregung der eigentlichen Trägerplatte 10, nämlich der Trägerplatte 10 mit Ausnahme des inneren Abschnitts 100A, wird damit erheblich gedämpft.

Durch Ausbildung und Ausrichtung der Schlitze 102A und Stege 102B kann die Anregung der Trägerplatte 10 und auch deren Resonanzverhalten in gewünschter Weise angepasst und eingestellt werden.

Anstelle der in Fig. 2 bis 4 dargestellten kreisförmigen Ausbildung des Entkopplungsrings 102 sind grundsätzlich auch andere Formgebungen möglich, beispielsweise eine ovale oder rechteckige Ausbildung des Entkopplungsrings 102.

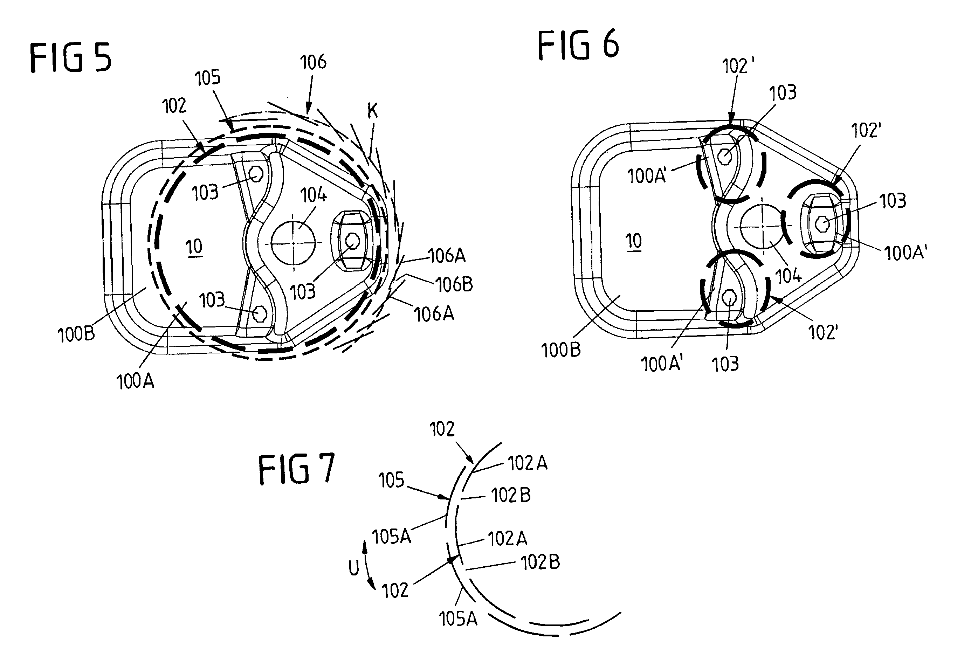

Wie in Fig. 5 veranschaulicht, können auch mehr als ein Entkopplungsring, nämlich zwei oder mehr Entkopplungsringe 102, 105, 106 vorgesehen sein, die die Antriebseinheit 13 umfänglich umgeben und damit einschließen und in radialer Richtung (von der Antriebseinheit 13 aus gesehen) zueinander versetzt sind. Die Entkopplungsringe 102, 105, 106 können dabei unterschiedlich ausgebildete Schlitze 102A, 105A, 106A aufweisen, die sich beispielsweise in ihrer Länge unterscheiden, oder auch, wie am Entkopplungsring 106 beispielhaft veranschaulicht, sich gegenseitig überlappen.

Ein dem Entkopplungsring 106 entsprechender Entkopplungsring kann auch als einzelner Entkopplungsring vorgesehen sein. Bei dem Entkopplungsring 106 sind Schlitze 106A überlappend zueinander angeordnet und folgen damit nicht (beispielsweise auf einem den Entkopplungsring beschreibenden Kreis) aneinander gereiht aufeinander, sondern erstrecken sich schräg zu einem (gedachten) Kreis K und überlappen sich in Endabschnitten gegenseitig derart, dass auf einen äußeren Endabschnitt eines Schlitzes 106A immer ein innerer Endabschnitt des nächstfolgenden Schlitzes 106A folgt. Auf diese Weise wird die Formgebung der Stege 106B angepasst, die sich zwischen den Schlitzen 106A hindurch erstrecken und damit schräg zu den primären, von den Befestigungsstellen ausgehenden Ausbreitungsrichtungen der Schallwellen gerichtet sind.

Denkbar ist auch, die Schlitze 106A des Entkopplungsringes 106 gekrümmt und nicht, wie in Fig. 5 dargestellt, geradlinig auszubilden.

Anstatt die Antriebseinheit 13 insgesamt durch einen oder mehrere Entkopplungsringe 102, 105, 106 zu umgeben, können auch die Befestigungsstellen 103 der Antriebseinheit 13 gesondert jede für sich einzeln von einem oder mehreren Entkopplungsringen 102, 105, 106 umgeben sein, wie dies in Fig. 6 veranschaulicht ist.

Werden zwei oder mehr Entkopplungsringe 102, 105, 106 vorgesehen, können die Schlitze 102A, 105A, 106A der Entkopplungsringe 102, 105, 106 so zueinander angeordnet sein, dass sie sich in Umfangsrichtung U überlappen. Mit anderen Worten folgen die Stege 102B, 105B, 106B der Entkopplungsring 102, 105, 106 von innen nach außen gesehen nicht unmittelbar aufeinander, sondern sind in Umfangsrichtung U zueinander versetzt, so dass über die Antriebseinheit 13 angeregte Schallwellen sich nicht ohne weiteres über die Stege 102B, 105B, 106B ausbreiten können, sondern nach Passieren eines Steges 102B auf einen in radialer Richtung (von der Antriebseinheit 13 aus gesehen) folgenden Schlitz 105A treffen und reflektiert werden.

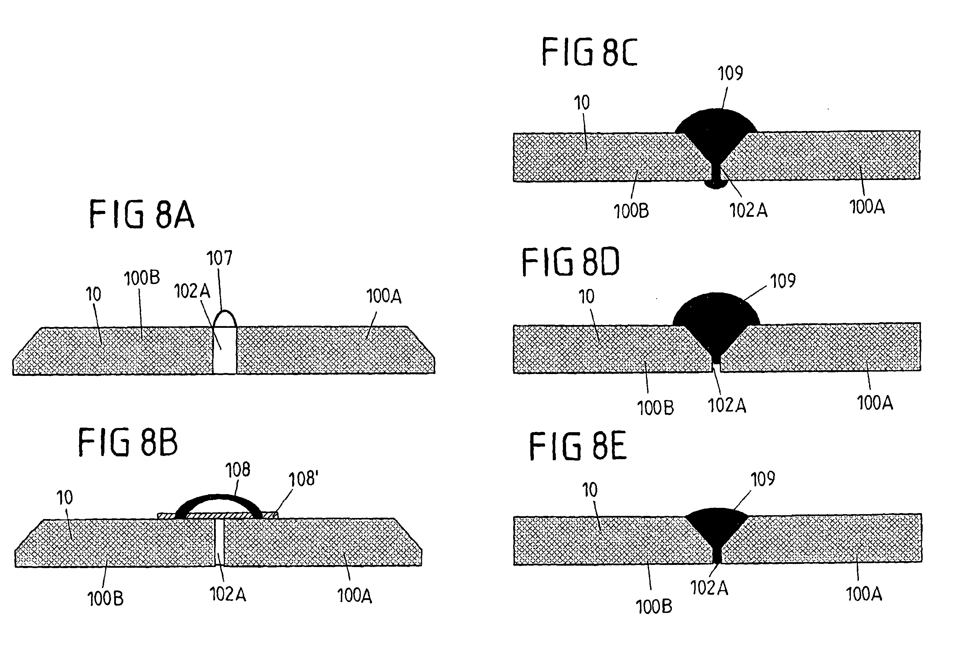

Über die Schlitze 102A, 105A, 106A ist die Trägerplatte 10 akustisch unterbrochen und damit akustisch geöffnet. Um die Trägerplatte 10 zum Ausbilden einer Feuchtigkeitsbarriere und zur Trennung eines Nassraums von einem Trockenraum einer Fahrzeugtür trotzdem feuchtigkeitsdicht auszubilden, sind die Schlitze 102A, 105A, 106A feuchtigkeitsdicht verschlossen, indem ein Filmscharnier 107 (Fig. 8A), eine Folie 108, 108' (Fig. 8B) oder eine Schaumfüllung 109 (Fig. 8C, 8D, 8E) zum feuchtigkeitsdichten Verschließen der Schlitze 102A, 105A, 106A vorgesehen ist. Der Filmscharnier 107, die Folie 108 und die Schaumfüllung 109 dienen dabei allein als Feuchtigkeitsbarriere, haben aber auf die akustische Entkopplungswirkung der Schlitze 102A, 105A, 106A keinen oder einen vernachlässigbaren Einfluss. Akustisch bleibt die Trägerplatte 10 am Ort der Schlitze 102A, 105A, 106A geöffnet.

Bei Verwendung eines Filmscharniers 107, wie in Fig. 8A dargestellt, kann das Filmscharnier aus demselben Material wie die Trägerplatte 10 hergestellt und im selben Arbeitsgang gespritzt werden.

Die Folie gemäß Fig. 8B kann sich wölbend (Folie 108) oder flach (Folie 108') auf die Trägerplatte 10 aufgeklebt sein.

Die Schaumfüllungen gemäß Fig. 8C, Fig. 8D und Fig. 8E unterscheiden sich durch den Überstand der Schaumfüllung 109 auf einer oder auf beiden Seiten der Trägerplatte 10. Bei der Variante gemäß Fig. 8C steht die Schaumfüllung auf beiden Seiten über und bildet damit einen Formschluss, so dass die Schaumfüllung 109 nach dem Einbringen (zum Beispiel Einspritzen) nicht mehr aus dem Schlitz 102A rutschen kann. Bei der Variante gemäß Fig. 8D erstreckt sich die Schaumfüllung 109 nicht ganz von der einen zur anderen Seite. Bei der Variante gemäß Fig. 8E steht die Schaumfüllung 109 auf der einen Seite geringfügig über, schließt auf der anderen Seite aber mit der Oberfläche der Trägerplatte 10 ab.

Der der Erfindung zugrunde liegende Gedanke ist nicht auf die vorangehen geschilderten Ausführungsbeispiele beschränkt, sondern lässt sich grundsätzlich auch bei gänzlich anders gearteten Ausführungsformen einsetzen. So können die Entkopplungsringe beispielsweise auch eine völlig andere Gestallt aufweisen und aus anders gestalteten Schlitzen hergestellt sein. So kann sich ein Schlitz beispielsweise auch spiralförmig um eine Antriebseinheit oder um eine Befestigungsstelle der Antriebseinheit erstrecken und sich damit selbst in Umfangsrichtung überlappen.

### Bezugszeichenliste

- 1: Türmodul
- 10: Trägerplatte
- 100A, 100B: Abschnitt
- 101: Ausformung
- 102, 102': Entkopplungsring
- 102A: Schlitz
- 102 B: Steg
- 103: Befestigungsstellen
- 104: Durchgriffsöffnung
- 105: Entkopplungsring
- 105A: Schlitz
- 106: Entkopplungsring
- 106A: Schlitz
- 106B: Steg
- 107: Filmscharnier
- 108, 108': Folie
- 109: Schaumfüllung
- 11: Fensterheber
- 12: Lautsprecher
- 13: Antriebseinheit
- 130: Antriebsmotor
- 131: Welle
- 132: Getriebegehäuse
- A: Anregung
- B: Breite
- K: Kreis
- L: Länge
- R: Reflektion
- T: Transmission
- U: Umfangsrichtung

## Patentansprüche

1. Türmodul einer Fahrzeugtür, mit
- einer Trägerplatte, mit daran befestigten Funktionskomponenten,
- einer an der Trägerplatte angeordneten Antriebseinheit zum Antreiben einer motorisch betriebenen Verstellvorrichtung des Türmoduls und
- einem an der Trägerplatte angeordneten Entkopplungsmittel zum Dämpfen einer akustischen Anregung der Trägerplatte im Betrieb der Antriebseinheit,
**dadurch gekennzeichnet,**
**dass** das Entkopplungsmittel durch
- mindestens einen Schlitz (102A), der einen die Antriebseinheit (13) tragenden Abschnitt (100A, 100A') der Trägerplatte (10) von einem anderen Abschnitt (100B) der Trägerplatte (10) abschnittsweise trennt und um die Antriebseinheit (13) oder um eine Befestigungsstelle (103) der Antriebseinheit (13) an der Trägerplatte (10) in eine Umfangsrichtung (U) umläuft, und
- mindestens einen Steg (102B), der den die Antriebseinheit (13) tragenden Abschnitt (100A, 100A') der Trägerplatte (10) mit dem anderen Abschnitt (100B) der Trägerplatte (10) verbindet,
gebildet ist, wobei der mindestens eine Schlitz (102A, 105A, 106A) feuchtigkeitsdicht verschlossen ist, indem an der Trägerplatte (10) zur Feuchtigkeitsabdichtung eine den mindestens einen Schlitz (102A, 105A, 106A) abdeckende oder ausfüllende Folie (108, 108'), ein Filmscharnier (107) oder eine aus einem gegenüber dem Material der Trägerplatte (10) weichen Material bestehende Füllung angeordnet ist.

2. Türmodul nach Anspruch 1, **dadurch gekennzeichnet, dass** der Schlitz (102A) die Trägerplatte (10) abschnittsweise öffnet.

3. Türmodul nach Anspruch 1 oder 2, **dadurch gekennzeichnet, dass** die in Umfangsrichtung (U) gemessene Breite (B) des den Schlitz (102A) unterbrechenden Stegs (102B) kleiner ist als die in Umfangsrichtung (U) gemessene Länge (L) des sich an der Trägerpatte (10) erstreckenden Schlitzes (102B).

4. Türmodul nach einem der Ansprüche 1 bis 3, **dadurch gekennzeichnet, dass** der mindestens eine Schlitz (102A) und der mindestens eine Steg (102B) zusammen einen die Antriebseinheit (13) umfänglich umgebenden Entkopplungsring (102) zum akustischen Entkoppeln der Antriebseinheit (13) ausbilden.

5. Türmodul nach Anspruch 4, **dadurch gekennzeichnet, dass** der an der Trägerplatte (10) angeordnete Entkopplungsring (102) die Antriebseinheit (13) umfänglich umgibt.

6. Türmodul nach Anspruch 4, **dadurch gekennzeichnet, dass** der an der Trägerplatte (10) angeordnete Entkopplungsring (102) mindestens eine Befestigungsstelle (103) der Antriebseinheit umfänglich umgibt.

7. Türmodul nach einem der Ansprüche 4 bis 6, **dadurch gekennzeichnet, dass** zwei oder mehr Entkopplungsringe (102, 105, 106), gebildet jeweils durch mindestens einen Schlitz (102A, 105A, 106A) und mindestens einen Steg (102B, 105B, 106B), an der Trägerplatte (10) angeordnet und quer zur Umfangsrichtung (U) voneinander beabstandet sind.

8. Türmodul nach einem der Ansprüche 4 bis 7, **dadurch gekennzeichnet, dass** ein innerer Entkopplungsring (102) und ein äußerer Entkopplungsring (105) derart zueinander angeordnet sind, dass ein Steg (102B) des inneren Entkopplungsrings (102) in Umfangsrichtung (U) zu einem Steg (105B) des äußeren Entkopplungsrings (105) versetzt ist.

9. Türmodul nach einem der Ansprüche 4 bis 8, **dadurch gekennzeichnet, dass** die Schlitze (102A) des Entkopplungsrings (102) sich in Umfangsrichtung (U) zumindest abschnittsweise überlappen.

10. Türmodul nach einem der vorangehenden Ansprüche, **dadurch gekennzeichnet, dass** an der Trägerplatte (10) zur Feuchtigkeitsabdichtung eine Schaumfüllung (109) angeordnet ist.

## Claims

1. A door module of a vehicle door, comprising
- a carrier plate with functional components mounted thereon,
- a drive unit arranged on the carrier plate for driving a power-operated adjustment device of the door module, and
- a decoupling means arranged on the carrier plate for attenuating an acoustic excitation of the carrier plate in operation of the drive unit,
**characterized in**
**that** the decoupling means is formed by
- at least one slot (102A) which partly separates a portion (100A, 100A') of the carrier plate (10) carrying the drive unit (13) from another portion (100B) of the carrier plate (10) and extends around the drive unit (13) or around a fastening point (103) of the drive unit (13) on the carrier plate (10) in a circumferential direction (U), and
- at least one web (102B) which connects the portion (100A, 100A') of the carrier plate (10) carrying the drive unit (13) with the other portion (100B) of the carrier plate (10),
wherein the at least one slot (1 02A, 105A, 106A) is closed in a moisture-tight manner in that a film (108, 108') covering or filling the at least one slot (102A, 105A, 106A), a film hinge (107) or a fill consisting of a material which is soft as compared to the material of the carrier plate (10) is arranged on the carrier plate (10) for waterproofing.

2. The door module according to claim 1, **characterized in that** the slot (102A) partly opens the carrier plate (10).

3. The door module according to claim 1 or 2, **characterized in that** the width (B) of the web (102B) interrupting the slot (102A) as measured in circumferential direction (U) is smaller than the length (L) of the slot (102B) extending along the carrier plate (10) as measured in circumferential direction (U).

4. The door module according to any of claims 1 to 3, **characterized in that** the at least one slot (102A) and the at least one web (102B) together form a decoupling ring (102) circumferentially surrounding the drive unit (13) for acoustically decoupling the drive unit (13).

5. The door module according to claim 4, **characterized in that** the decoupling ring (102) arranged on the carrier plate (10) circumferentially surrounds the drive unit (13).

6. The door module according to claim 4, **characterized in that** the decoupling ring (102) arranged on the carrier plate (10) circumferentially surrounds at least one fastening point (103) of the drive unit.

7. The door module according to any of claims 4 to 6, **characterized in that** two or more decoupling rings (102, 105, 106), each formed by at least one slot (102A, 105A, 106A) and at least one web (102B, 105B, 106B), are arranged on the carrier plate (10) and spaced from each other transverse to the circumferential direction (U).

8. The door module according to any of claims 4 to 7, **characterized in that** an inner decoupling ring (102) and an outer decoupling ring (105) are arranged relative to each other such that a web (102B) of the inner decoupling ring (102) is offset to a web (105B) of the outer decoupling ring (105) in circumferential direction (U).

9. The door module according to any of claims 4 to 8, **characterized in that** the slots (102A) of the decoupling ring (102) at least partly overlap each other in circumferential direction (U).

10. The door module according to any of the preceding claims, **characterized in that** for waterproofing a foam fill (109), is arranged on the carrier plate (10).

## Revendications

1. Module de porte d'une porte de véhicule comprenant
- une plaque porteuse avec des composants fonctionnels fixés dessus,
- une unité d'entraînement disposée sur la plaque porteuse pour l'entraînement d'un dispositif de déplacement motorisé du module de porte et
- un moyen de découplage disposé sur la plaque porteuse pour l'amortissement d'une activation acoustique de la plaque porteuse pendant le fonctionnement de l'unité d'entraînement,
**caractérisé en ce que**
le moyen de découplage est formé par
- au moins une fente (102A) qui sépare par sections une section (100A, 100A') portant l'unité d'entraînement (13) de la plaque porteuse (10) d'une autre section (100B) de la plaque porteuse (10) et tourne autour de l'unité d'entraînement (13) ou autour d'un point de fixation (103) de l'unité d'entraînement (13) sur la plaque porteuse (10) dans une direction circonférentielle (U), et
- au moins une nervure (102B) qui relie la section (100A, 100A') portant l'unité d' entraînement (13) de la plaque porteuse (10) à l'autre section (100B) de la plaque porteuse (10),
dans lequel l'au moins une fente (102A, 105A, 106A) étant fermée de manière étanche à l'humidité en disposant sur la plaque porteuse (10), pour l'étanchéité à l'humidité d'un film (108, 108') remplissant ou recouvrant au moins une fente (102A, 105A, 106A), une charnière à film (107) ou un remplissage se composant d'un matériau souple par rapport au matériau de la plaque porteuse (10).

2. Module de porte selon la revendication 1, **caractérisé en ce que** la fente (102A) ouvre par sections la plaque porteuse (10).

3. Module de porte selon la revendication 1 ou 2, **caractérisé en ce que** la largeur (B) mesurée dans le sens périphérique (U) de la nervure (102B) interrompant la fente (102A) est inférieure à la longueur (L) mesurée dans le sens périphérique (U) de la fente (102B) s'étendant sur la plaque porteuse (10).

4. Module de porte selon l'une quelconque des revendications 1 à 3, **caractérisé en ce que** l'au moins une fente (102A) et l'au moins une nervure (102B) réalisent ensemble un anneau de découplage (102) entourant sur la périphérie l'unité d'entraînement (13) pour le découplage acoustique de l'unité d'entraînement (13).

5. Module de porte selon la revendication 4, **caractérisé en ce que** l'anneau de découplage (102) disposé sur la plaque porteuse (10) entoure sur la périphérie l'unité d'entraînement (13).

6. Module de porte selon la revendication 4, **caractérisé en ce que** l'anneau de découplage (102) disposé sur la plaque porteuse (10) entoure sur la périphérie au moins un point de fixation (103) de l'unité d'entraînement.

7. Module de porte selon l'une quelconque des revendications 4 à 6, **caractérisé en ce que** deux anneaux de découplage (102, 105, 106) ou plus formés respectivement par au moins une fente (102A, 105A, 106A) et au moins une nervure (102B, 105B, 106B) sont disposés sur la plaque porteuse (10) et sont espacés l'un de l'autre transversalement au sens périphérique (U).

8. Module de porte selon l'une quelconque des revendications 4 à 7, **caractérisé en ce qu'**un anneau de découplage intérieur (102) et un anneau de découplage extérieur (105) sont disposés l'un par rapport à l'autre de telle manière qu'une nervure (102B) de l'anneau de découplage intérieur (102) soit déplacée dans le sens périphérique (U) par rapport à une nervure (105B) de l'anneau de découplage extérieur (105).

9. Module de porte selon l'une quelconque des revendications 4 à 8, **caractérisé en ce que** les fentes (102A) de l'anneau de découplage (102) se chevauchent au moins par sections dans le sens périphérique (U).

10. Module de porte selon l'une quelconque des revendications précédentes, **caractérisé en ce qu'**un remplissage de mousse (109) est disposé sur la plaque porteuse (10) pour l'étanchéité à l'humidité.
